Europäisches Patentamt

European Patent Office

Office européen des brevets

(19)

(11) Publication number: 0 378 879 A2

# EUROPEAN PATENT APPLICATION

(12)

(21) Application number: 89203241.8

(22) Date of filing: 19.12.89

(51) Int. Cl.⁵: G01N 27/26

(30) Priority: 16.01.89 IT 1910089

(43) Date of publication of application:
25.07.90 Bulletin 90/30

(84) Designated Contracting States:
AT BE CH DE ES FR GB GR IT LI LU NL SE

(71) Applicant: **Nardo, Pietro**
**Viale Buffoli, 21**
**I-20095 Cusano Milanino (Mi)(IT)**

(72) Inventor: **Nardo, Pietro**
**Viale Buffoli, 21**
**I-20095 Cusano Milanino (Mi)(IT)**

(74) Representative: **Marchi, Massimo et al**
**c/o Marchi & Mittler s.r.l. Viale Lombardia 20**
**I-20131 Milano(IT)**

(54) Support and translation system for operational units of medical equipment.

(57) A system of support and translation system for operational units of medical, analytical and scientific equipment, in particular for the treatment of electrophoretic strips, comprises a prismatic guideway (11) fastened to a base (10), and a carriage (12) mounted on guideway (11) and destined for supporting an operational unit. Carriage (12) is provided with a plurality of opposed pairs of ball bearings (15, 1 supported by respective lateral supports (17, 1 having a prismatic transversal cross-section which complementary to that of guideway (11). Said su ports (17, 18) are interconnected with a bridge cov (19) by fastening and adjustment means (20, 21).

Fig.1

## Support and translation system for operational units of medical equipment

The present invention relates to a support and translation system for operational units of medical, analytical and scientific equipment.

The invention is destined, particularly but not exclusively, for use in equipment for the treatment of electrophoretic strips comprising a plurality of basins which contain liquid substances suitable for the treatment of blood samples, deposited on said strips, say, for the determination of serum proteins, hemoglobin, lipids and such like.

Equipment for the treatment of electrophoretic strips is well known to persons skilled in the art.

A type of equipment currently adopted with more than satisfactory results has a structure which, in brief, comprises, in combination: a succession of basins placed side by side wherein the electrophoretic strips, each mounted on a special frame, are immersed into appropriate treatment baths, and means of transport for moving the strips from one to the other of said basins and for their immersion into said baths.

Such equipment is described and illustrated in the Industrial Patent Application No. 21639 A/85, filed on July 19 1985 in the name of the same Applicant. A particular type of supporting frame for electrophoretic strips is, on the other hand, described and illustrated in the Utility Model Application No. 22221 B/88, filed on November 29 1988 in the name of the same Applicant.

For further information on this, please see the above Applications.

The known means of transport for moving the strips from one to the other of said basins and for their immersion into said baths are constituted by an apparatus wherein a grasping clamp of the strip holding frame is animated in movements along two or three Cartesian axes.

In the latter case the clamp is held by a first carriage translatable along a horizontal arm which extends like a cantilever from a second carriage which is vertically translatable along a column; in turn said column is mounted on a third carriage translatable along a base. It thus appears evident that the possibility is ensured for the clamp to move along three Cartesian axes for the immersion of the electrophoretic strips into the treatment baths and for their movement from one basin to another.

In equipment of the above type the carriages, supporting clamp, horizontal arm and vertical column, respectively, translate along flat guideways, of the type widely adopted in machine tools wherein the rolling surfaces of the carriage's ball bearings are hardened.

Said guideways are thus special and as a consequence very expensive; and if they can b justified in a machine tool, where substantial load and centesimal accuracy are in play, they cannot i medical equipment of the above type where th movement loads, if compared with those of ma chine tools, are to be considered insignificant, an wherein the accuracy required are of another orde certainly lower.

In the light of the above considerations, it i evident that, in the particular case of equipment fc the treatment of electrophoretic strips, the inc dence of the cost of the special hardened guide ways on the overall cost of the machine is substar tial, especially if we take into account the actue work which said guideways must perform.

The object of the invention is consequently tha of overcoming the drawbacks of the known art b accomplishing a system of support and translatio for operational units of medical equipment, in pai ticular for the treatment of electrophoretic strips, s designed that it can utilize inexpensive guideway which have not been subjected to any specie treatment.

In view of such object, according to the inver tion, the accomplishment has been thought up of system of support and translation for operatione units of medical equipment characterized in that comprises: a prismatic guideway fastened to base and a carriage mounted on the guideway b means of a plurality of opposed pairs of ball beai ings supported by respective prismatic lateral sup ports having their transversal cross-section corr plementary to that of the guideway, said support being interconnected with a cover by fastening an adjustments means, so that the pressure of th bearings on the respective prismatic rolling su faces of the guideway may be adjusted.

Preferably said fastening and adjustment means are constituted by screws, the screws ha ing a cylindrical head which is sunk in an eccentri manner within an ovalized seat of said cover.

The structural and functional characteristics c the invention and its advantages with respect to th known art shall be more clearly understandabl from the following description, referred to the er closed schematic drawings, which show an exam ple of a support and guideway system incorpora ing the innovative principles of the invention. In th drawings:

Figure 1 is a plan view from above illustra ing a system accomplished according to the princ ples of the invention;

Figure 2 is a cross-section taken along th line II-II of Figure 1; and

Figure 3 is a cross-section taken along th

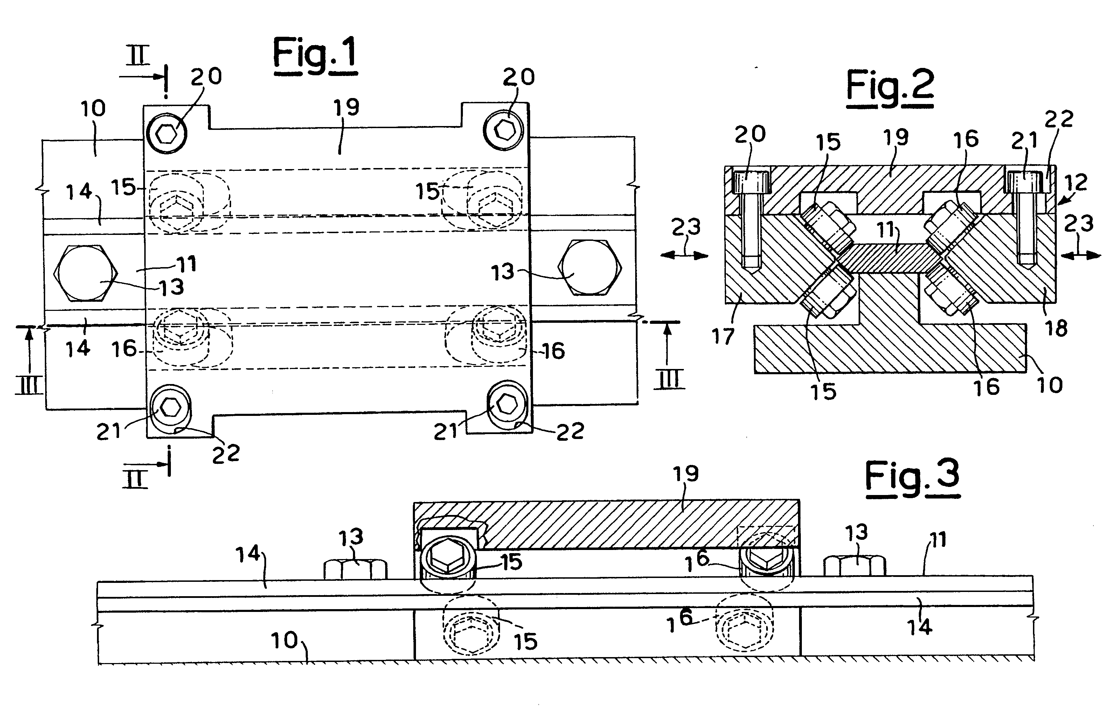

line III-III of Figure 1.

With reference to the drawings, the guideway and support system according to the invention is essentially formed by three components: a base section bar 10, with an inverted T-section, a guideway 11 and a carriage 12.

The guideway 11 is a simple metal section bar which, as in 13, is bolted to the base section bar 10 and has pairs of prismatic lateral surfaces 14, on which the carriage 12 translates.

The carriage 12 is slidably mounted on guideway 11 by means of a plurality of opposed pairs of ball bearings 15, 16.

In the non-limiting example shown in the drawings, there are provided two pairs of bearings 15 and two pairs of bearings 16 supported by respective prismatic lateral supports 17, 18, which are interconnected with a cover 19 which is bolted to the same supports 17, 18 by means of respective pairs of fastening and adjustments screws 20, 21.

As can be seen clearly from Figure 2 of the drawings, the prismatic supports 17, 18 have their transversal cross-section complementary to that of the guideway 11, so that bearings 15, 16 rest perfectly and roll with a minimum of friction on the respective surfaces faced by prismatic guideway 11.

The pressure of bearings 15, 16 on guideway 11 may be adjusted by means of screws 21 which, to this end, have their cylindrical head sunk in an eccentric manner within an ovalized seat 22 of cover 19. In this way, by tightening or loosening screws 21, it will be possible, in the directions of arrows 23, to adjust the pressure of bearings 15, 16 on the respective prismatic surfaces of guideway 11.

There is thus attained the object mentioned at the preamble of the description of accomplishing a system having a structure such as to allow the use of an inexpensive guideway 11, while still ensuring the accuracy required for the specific application and a translation of carriage 12 with minimum friction, thus with a minimum application of power, and with negligible wear, which ensures reliability and long life of the system according to the invention.

On the other hand, the low cost of the guideway adopted in the system of the invention makes it replaceable, if necessary, with extreme ease.

The operational unit of the medical equipment, which has not been shown for the sake of drawing simplicity, can then be constrained to carriage 12 in the most appropriate manner and witha disposition according to the function which the equipment itself will perform.

**Claims**

1. System of support and translation for ope ational units of medical equipment characterized that it comprises: a prismatic guideway (11) fa tened to a base (10) and a carriage (12) mounte on guideway (11) by means of a plurality of o posed pairs of ball bearings (15, 16) supported t respective prismatic lateral supports (17, 18) havir their transversal cross-section complementary that of guideway (11), said supports (17, 18) beir interconnected with a cover (19) by fastening ar adjustments means (20, 21), so that the pressure bearings (15, 16) on the respective prismatic rollir surfaces of the guideway (11) may be adjusted.

2. System according to claim 1, characterize in that said fastening and adjustment means (2 21) are constituted by screws, the screws (2 having a cylindrical head which is sunk in an e centric manner within an ovalized seat (22) of sa cover (19).

Fig.1

Fig.2

Fig.3

EP 0 378 879 A2